# NEW EUROPEAN PATENT SPECIFICATION

(11) **EP 1 556 181 B2**
(45) Date of publication and mention of the opposition decision: **12.03.2014**
(45) Mention of the grant of the patent: 02.06.2010
(21) Application number: 03808024.8
(22) Date of filing: 13.06.2003
(51) Int. Cl.: B22D 17/26

(54) **METHOD AND APPARATUS FOR DIE-CASTING A V-BLOCK FOR AN INTERNAL COMBUSTION ENGINE**
VERFAHREN UND VORRICHTUNG ZUM DRUCKGIESSEN EINES V-BLOCKS FÜR EINEN VERBRENNUNGSMOTOR
PROCEDE ET APPAREIL PERMETTANT DE COULER SOUS PRESSION UN BLOC EN V POUR UN MOTEUR A COMBUSTION INTERNE

(30) Priority: 03.10.2002 US 264151
(43) Date of publication of application: 27.07.2005
(73) Proprietor: Delaware Dynamics LLC, Cleveland, OH 44114 (US)
(72) Inventor: WHEALY, Gregg, Edward, Losantville, IN 47354 (US); HAAS, Ryan, Andrew c/o Delaware Machinery and Tool Company, Inc., Muncie, IN 47302 (US)
(74) Representative: Wagner, Karl H.
(86) International application number: PCT/US2003/018870
(87) International publication number: WO 2004/033131

(56) References cited:
- US-A- 3 165 796
- US-A- 3 596 708
- US-A- 4 206 799
- US-A- 4 981 168
- US-A- 5 865 241

## Description

### Technical Field

This invention relates to die-casting methods and apparatus, and more particularly, to methods and apparatus for die-casting V-blocks for internal combustion engines.

### Background of the Invention

Die-casting is being used for the manufacture of larger and larger articles. Such large automotive parts as internal combustion engine blocks and the housings for automatic transmissions are now commonly manufactured with die-casting as the first step in formation of the part. Such parts have extensive and complex surfaces with close tolerances; and die-casting permits their formation in high production, eliminating costly machining operations and saving metal. Die-casting requires extreme pressures exerted on the liquid metal and large amounts of heat are released from the molten metals as they change state. Massive dies are required to maintain dimensional tolerances within the limits making such operations economically attractive and to provide the strength to withstand the stresses resulting from high pressures and forces. The die-casting molds for such large automotive parts as automatic transmission housings are, for example, frequently seven to eight feet (2.1-2.5 meters) tall, seven to eight fee (2.1-2.5 meters) wide, and six to seven feet (1.8-2.1 meters) thick when closed, and must be manufactured from high-grade, high-tensile strength steel. (The words "mold" and "die" are used interchangeably herein.)

Such molds frequently include one stationary element, one movable element operated by the die-casting machine to close the mold, and several slidable elements referred to as "slides," that move transversely of the direction of movement of the die-casting machine to provide a mold cavity with intricate and re-entrant surface configurations. The mold slides, which slide transversely of the direction of movement of the die-casting machine, are generally moved by hydraulic cylinders to their proper positions.

Die-casting has become desirable as a manufacturing method for parts such as automobile engine blocks and transmission housings because it can produce intricately shaped parts to close tolerances. Die-casting can provide such parts with strength and intricately shaped surfaces without extensive and expensive machining operations. Such parts have wall thicknesses designed to take advantage of the economy of die-casting operations. Misalignment of the mold parts due, for example, to warping of the mold, misalignment of the mold on the molding machine, or non-parallelism in the molding machine platen surfaces or their direction of the movement, can vary wall thicknesses and distort part surface dimensions to unacceptable limits and result in a substantial waste of die-cast parts.

The die-casting of V-blocks fo internal combustion engines poses a difficult problem because the formation of the cylinders of a V-block requires a plurality of cylinder-forming die core elements that must be moved in the die at the acute angle on which the internal combustion engine's pistons will operate, and because the V-blocks are large and heavy and are subject to close tolerances in their dimensions.

In the die-casting of such engine blocks, a plurality of movable die parts are registered in a die-closed position to form a die cavity, and are subsequently retracted to permit removal of the cast part from the die. These die parts must be held in place in the closed position against extremely high molten metal injection forces, sometimes up to 500,000 to 1,000,000 pounds. The die parts, which are movable in a direction coinciding with the principal or longitudinal direction of movement of the die-casting machine, are locked in place by the closing mechanism of the die-casting machine itself. The die parts, or slides, which move in a direction parallel to the parting plane, which is perpendicular to the axis of movement of the die-casting machine, are locked in place when the die is closed by interacting surfaces on the slides and the die cover and the closing mechanism of the die-casting machine. Even though substantial force builds up during the metal injection step in die-casting, movable die members can be satisfactorily locked in a die-closed position by the forces imposed thereon by the closing mechanism of the die-casting machine when they move only in these two directions. However, the locking of die core elements which are movable at an acute angle with respect to the longitudinal axis of the die-casting machine has presented a different and difficult problem.

Wherever the descriptions herein refer to die core pieces or die core elements, or cylinder-forming die core pieces, the references refer to those die elements that move on an acute angle with respect to the direction of movement of the die-casting machine and can carry and position cylinder-forming sleeves in the V-block casting or can otherwise form the cylinders of the V-block casting.

U.S. Patent No. 3,433,292 discloses a die in which the die core elements have been locked in die-closed positions by engagement of a back-up plate with the piston rods of the separate hydraulic cylinder means used for moving the die core elements. This locking mechanism has not been satisfactory because the large angular forces imposed on the piston rods by the injection pressure of the molten metal adversely affect the packings of the hydraulic cylinders, and cause rapid wear in the area of contact between the piston ends and the back-up plate because of sliding action and relatively small contact areas.

U.S. Patent No. 4,206,799 discloses a further development in the die-casting of V-blocks by providing in a die an ejector die assembly comprising, in addition to a plurality of slides, a plurality of die members including die core elements movable relative to the die assembly in a direction at an acute angle to the longitudinal axis of movement of the die-casting machine, and a separate back-up plate means connected with the die-casting machine and attached to the back side of the ejector die assembly by a lost motion connection. In this die assembly, when the machine is in the closed position, the die members of the ejector die assembly, including the angularly movable die core elements, register in the die-closed position to define a cavity therebetween, and in this position, the back-up plate means is held against the rear side of the ejector die assembly and against the rear sides of the,angularly movable die core elements by the closing mechanism of the die-casting machine. The integrity of the cavity in the die-closed position is thus maintained. As the die is opened by the die-casting machine, the back-up plate means is withdrawn from the ejector die assembly to the limit of the lost motion connection, and the movable die core elements are retracted. Further withdrawal of the back-up plate means by the die-casting machine moves the ejector die assembly to the full die-open position.

U.S. Patent No. 5,868,241 discloses an alleged improvement on the V-block die of U.S. Patent No. 4,206,799 to provide cast V-blocks with closer tolerances. The die disclosed in U.S. Patent No. 5,865,241 differs from the die disclosed in U.S. Patent No. 4,206,799 by the addition of complementary male and female surface on the back-up plate (referred to as "the ejection box") and the ejector die assembly (referred to as "the ejector holder block") to more precisely locate the ejector die assembly (the ejector holder block) with respect to the back-up plate (ejection box) when the two parts are moved into abutment by the die-casting machine, and by the addition of an actuator, in addition to die-casting machine actuator, for moving the back-up plate (ejection box) and the ejector die assembly (the ejector holder block) into abutment.

Thus, recent developments of dies for die-casting V-blocks for internal combustion engines have included a first movable die element (referred to above as an "ejector die assembly" and an "ejector holder block"), which is carried by the slides and tie bars of the die-casting machine, and which carries the cylinder-forming die core elements reciprocatably, between their extended cavity-forming positions and their retracted part-ejection positions, along axes lying at acute angles with respect to the direction of the die closing and opening movement of the die-casting machine, and a plurality of cavity-forming slides and their hydraulic cylinder actuators. Such recent dies have also included a second movable part connected to the movable platen of the die-casting machine (referred to above as a back-up plate and an ejection block), which is also carried by the slides and tie bars of the die-casting machine separately from the first movable die element to provide a gap between it and the first movable die element for access to the cylinder-forming die core pieces and to provide forward surfaces to abut the cylinder-forming die core pieces in their extended cavity-forming positions to hold, with the closing mechanism of the die-casting machine, the cylinder-forming die core pieces in their extended cylinder-forming positions against the high pressures that are imposed by the injection pressure of the molten metal. Such dies include not only the movable die elements described above, but also a stationary die element (frequently referred to as the "die cover"). Such dies are expensive and frequently too massive and heavy for use with many smaller capacity die-casting machines.

Accordingly, a less expensive and less massive die for die-casting V-blocks for internal combustion engines is needed and will be advantageous.

### Brief Summary of the Invention

The invention provides an inexpensive die for die-casting a V-block for an internal combustion engine, which may be operated by a wide range of die-casting machines, including those with inadequate capacity to operate heavy dies for large cast parts. Dies of the invention preferably include, in addition to a stationary die element for the stationary platen of a die-casting machine, only a single movable die element carried by the tie bars and slides of a die-casting machine, carrying the cylinder-forming die core pieces, means for locking the die core pieces in their extended cylinder-forming positions, and the plurality of cavity-forming slides.

In accordance with the present invention, a die-casting die for casting a V-block of an internal combustion engine is provided as set forth in claim 1. Moreover, a method for casting a V-block for an internal combustion engine is provided as set forth in claim 21. Preferred embodiments of the present invention may be gathered from the dependent claims.

Other features and advantages of the invention will be apparent to those skilled in the art from the drawings and the more detailed description that follows.

### Brief Description of the Drawings

FIG. 1 is an illustration, from above, of a cross-section of a die of the invention mounted on the stationary and movable platens of a die-casting machine in the die open position, said cross-section being taken on a horizontal plane through the cylinder-forming die core pieces;
FIG. 2 is an illustration, corresponding to FIG. 1, of the die of FIG. 1 with its cylinder-forming die core pieces extended in their cylinder-forming positions;
FIG. 3 is an illustration, corresponding to FIG. 1, of the die of FIGS. 1 and 2 with its cylinder-forming die core pieces and cavity-forming slides in their cavity-forming positions;
FIG. 4 is an illustration, corresponding to FIG. 1, of the die of FIGS. 1-3 in the die-closed position;
FIG. 5 is an illustration, corresponding to FIG. 1, of the die of FIGS. 1-4 in the open position with a cast V-block carried by the movable die elements;
FIG. 6 is an illustration, corresponding to FIG. 1, of the die of FIGS. 1-5 in the open position with the cylinder-forming die core pieces retracted from the cast V-block;
FIG. 7 is an illustration, corresponding to FIG. 1, of the die of FIGS. 1-6 in the open position with the cylinder-forming die core pieces and cavity-forming slides retracted from their part-engaging positions;
FIG. 8 is an illustration, corresponding to FIG. 1, of the die of FIGS. 1-7 in the open position with the part ejector operated to eject the cast V-block;
FIG. 9 is a perspective illustration of the preferred die core locking means carried by the movable die element of the die illustrated in FIGS. 1-8 with the die core pieces in their retracted positions (with the surrounding parts of the movable die element not shown); and
FIG. 10 is a perspective illustration of the preferred die core locking means of FIG. 9 with the die core pieces in their extended cylinder-forming positions and the die core locking means in its die core locking position.

### Description of the Best Mode of the Invention

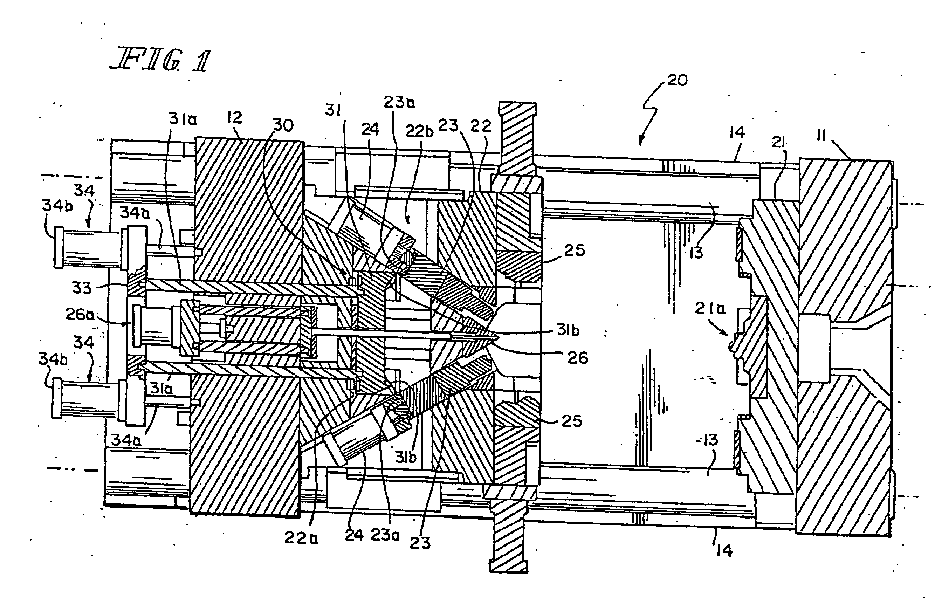

FIGS. 1-8 diagrammatically illustrate from above a die 20 of the invention mounted on the stationary platen 11 and movable platens 12 of a die-casting machine.

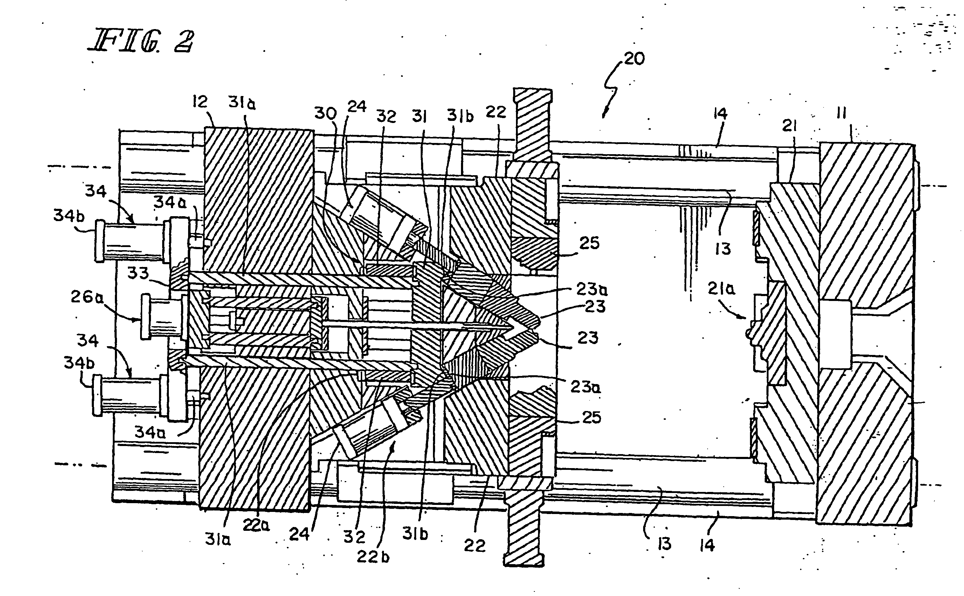

Referring now to FIG. 1, the die 20 of the invention includes a stationary die element 21 mounted on the stationary platen 11 and a movable die element 22 mounted on the movable platen 12 of the die-casting machine for movement toward and away from the stationary die element 21. A pair of cylinder forming die core pieces 23 are reciprocatably carried in the movable die element 22 at acute angles to the direction of movement of the movable die element 22 toward and away from the stationary die element 21. A pair of hydraulic cylinders 24 drive the die core pieces 23 outwardly and inwardly of the movable die element 22 and, respectively, toward and away from the stationary die element 21 (Compare FIGS. 1 and 2). As illustrated, the die core pieces 23, and their actuating hydraulic cylinders 24, are enclosed within the movable die element 22. The movable die element 22, and the plurality of die core pieces 23 within it, are carried by the movable platen 12 on the tie bars 13 and side rails 14 of the die-casting machine.

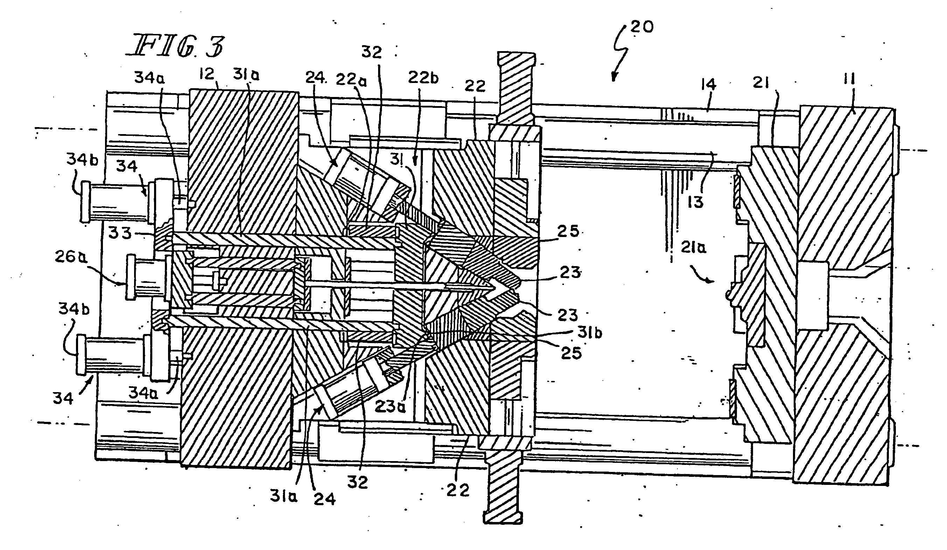

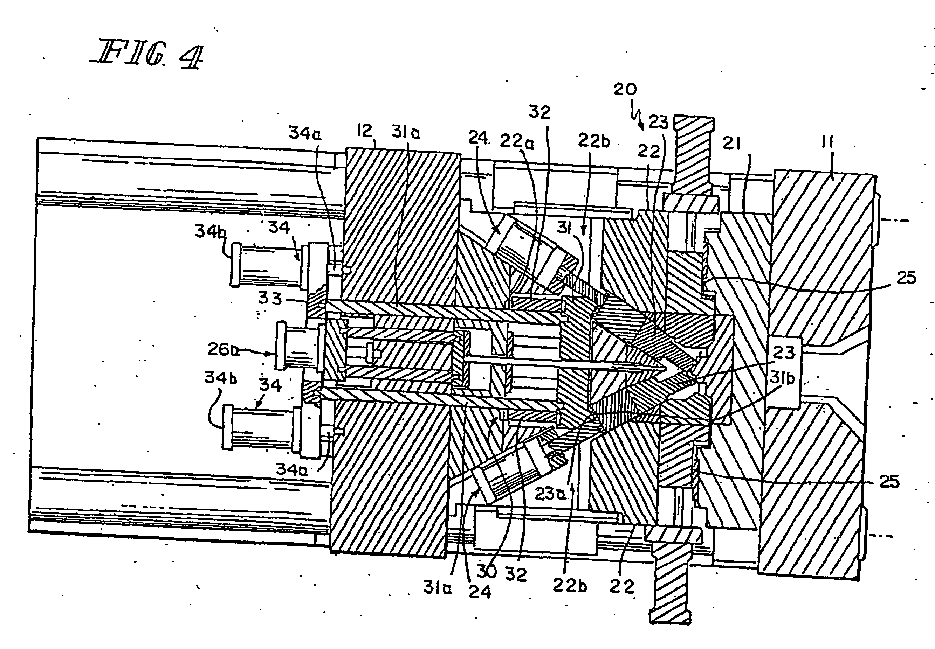

As known in the art, the die 20 includes a plurality of cavity-forming slides 25 that are also carried by the movable die element 22 and are reciprocatable in a direction perpendicular to the direction of movement of the movable die element 22, which is toward and away from the stationary die element 21 (Compare FIGS. 2 and 3). When the die is closed, as shown in FIG. 4, movable die element 22, die core pieces 23, and slides 25 cooperate with a cavity-forming portion 21a of the stationary die element 21 to form a cavity for an internal combustion engine V-block.

Also as known in the art, a part ejector 26 is carried by the movable die element 22 and is operated by hydraulic cylinders (not shown) connected between the movable platen 12 and the rearward elements 26a of the part ejector, which are slidably carried in the movable platen 12 and movable die element 22.

In the invention a die core locking means 30 is carried by the movable die element 22 and is movable between a first position where it engages and locks the die core pieces 23 in their extended cylinder-forming positions, as shown in FIGS. 2-4, and a second position out of engagement with the die core pieces 23, as shown in FIGS. 1 and 5-8.

In the preferred die core locking means 30 illustrated in FIGS. 1-10, a die core locking member 31 is carried within the movable die element 22 and can be actuated by a pair of double-acting hydraulic cylinders 34 connected at one end to the movable platen 12 on which the movable die element 22 is carried and at the other end to a bar 33 at the rear of the connection rods 31a of the die core locking member 31, which are slidably carried by the movable platen 12 and movable die element 22. Although the illustrated embodiment shows the piston element 34a engaged with the movable platen 12 and the cylinder 34b engaged with the bar 33, other mounting arrangements for the hydraulic cylinder actuators of the die core locking means 30 may be used, e.g., actuators may be carried by the die casting machine for operation of the die core locking means 30.

The die core locking member 31 has a pair of angled wear surfaces 31b at its forward-most end, which engage wear surfaces 23a at the rear of the die core pieces 23 when the die core pieces 23 are in their extended positions and the die core locking member 31 is in its forward position, as shown in FIGS. 2-4 and 10. In addition, as shown in FIGS. 2-4 and 10, a plurality of sliding locks 32 are moved into a position between the rear face of die core locking member 31 and an internal surface 22a at the rear of movable die element 23 to hold the die core locking member 31 in engagement with the die core pieces 23 as molten metal is injected under high pressure into the die cavity.

As illustrated by FIGS. 1-8, the movable die core element 22 can form an internal cavity 22b which carries the die core locking means 30. As best illustrated by FIG. 2, the cavity 22b has an open front portion into which the rear ends 23a of the die core pieces 23 extend when the die core pieces 23 are in their extended positions, and the die core locking means 30 can move within internal cavity 22b, as explained above, from its second position (shown in FIG. 1) to its first position where its forwardmost die core engagement surfaces 31b abut the rear ends 23a of the die core pieces 23. In the preferred embodiment illustrated, the cavity 22b encompasses the die core locking member 31 and locks 32 and provides an internal surface 22a that prevents the die core pieces 23 from being moved from their extended cylinder-forming position by the injection pressure of the molten metal when the locks 32 are moved inwardly within the cavity 22b between the rear end of the die core locking member 31 and internal surface 22a.

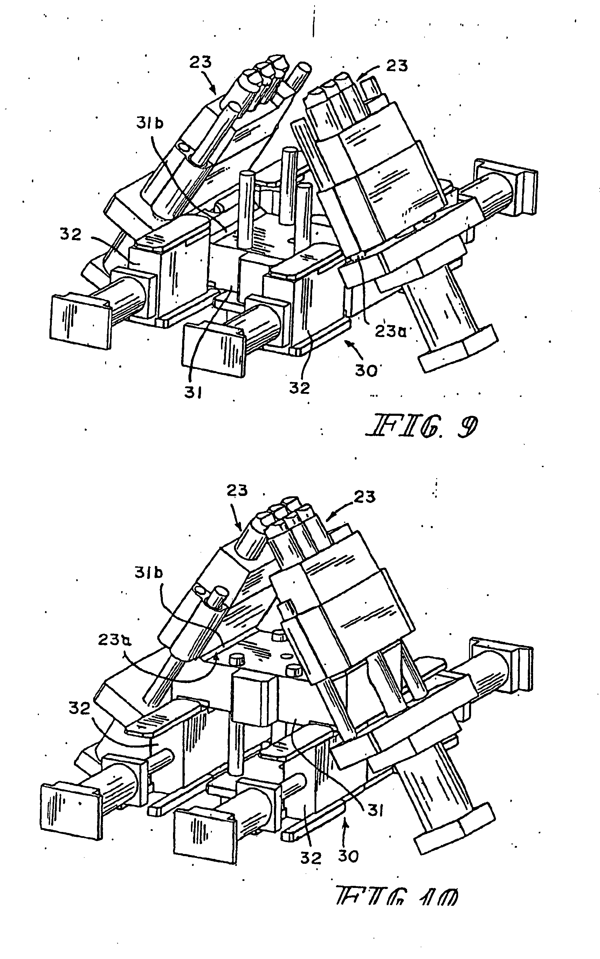

FIGS. 9 and 10 illustrate, with the surrounding cavity-forming portion of the movable die element 22 removed, the die core pieces 23, die core locking member 31 and slide locks 32 in their FIG. 1 and FIG. 2 positions, respectively.

As illustrated in FIG. 9, the die core pieces 23 are in their retracted positions, which is within the movable die element 22 and out of engagement with any cast V-block; the die core locking member 31 is in its rearward position out of engagement with the die core pieces 23, and the locks 32 are in their outward positions free from engagement with the die core locking member 31 and the die core pieces 23.

As illustrated in FIG. 10, the die core pieces 23 are in their extended, cylinder-forming positions; the die core locking member 31 has moved forwardly to engagement position with the angled wear surfaces 31b at its forwardmost end engaged with wear surfaces 23a at the rear of die core pieces 23; and slide locks 32 have moved inwardly between the die core locking member 31 and a rear internal surface 22a of the movable die element 22 to hold die core pieces 23 in their extended positions during casting. The rear internal surface 22a is not shown in FIGS. 9 and 10, but would be under the locks 32 as they are shown in FIGS. 9 and 10 (See FIGS. 1-8).

The following description of operation of a die 20 of the invention begins, as shown in FIG. 1, with the die 20 in its open position after a cast part has been ejected. In this position, the movable platen 12 and the movable die element 22 have been moved by the operating cylinder and toggle mechanism of the die-casting machine (not shown) rearwardly away from the stationary die element 21. The slides 25 have been moved outwardly by their actuators from the axis of movement of the movable platen 12 and movable die element 22. The die core locking member 31 has been moved rearwardly within the movable die element 22 out of contact with the die core pieces 23, and the die core pieces 23 have been retracted within the movable die element 22.

Next, the die core pieces 23 are extended from within the movable die element 22 and are locked in the extended position by engagement of their rear surfaces 23a with the die core locking member 31, which has been moved forwardly and is held in its forward position by slide locks 32, as shown in IGS. 2 and 10. In this position, cylinder sleeves can be placed on the die core pieces 23 by robots.

As shown in FIG. 3, the slides 25 are then moved by their hydraulic cylinder actuators inwardly on the movable die element 22 to position their cavity-forming portions on the movable die element 22, and are locked in their cavity-forming positions by the interengagement of locking surfaces on the slides 25 and stationary die elements 21, as known in the art.

The operating cylinder and toggle mechanism of the die-casting machine then moves the movable platen 12, its attached movable die element 22, and the die core pieces 23 and cavity-forming slides 25 carried by the movable die element 22, into engagement with stationary die element 21 to close the die cavity, and molten metal is thereafter injected into the closed cavity to form the cast part, as illustrated in FIG. 4.

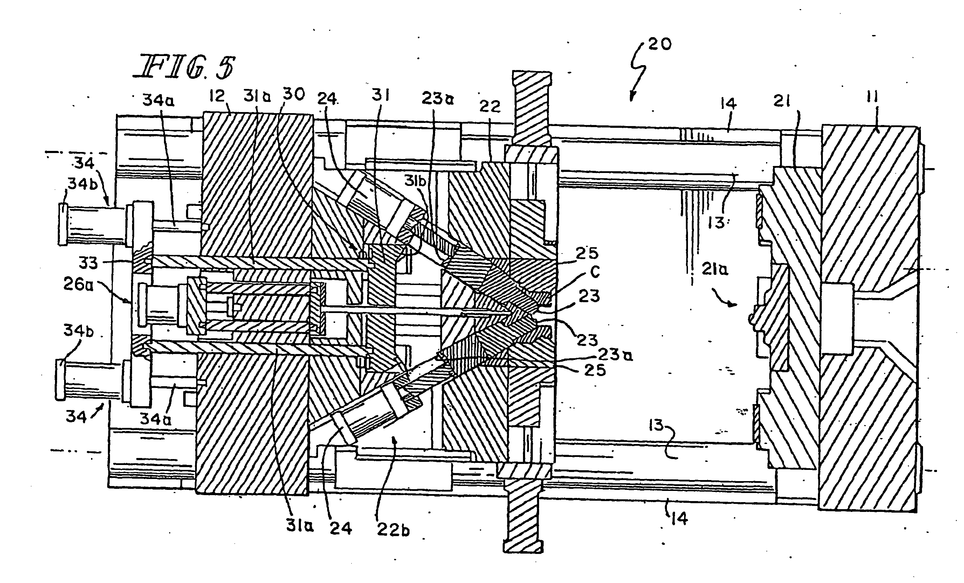

In removing the cast part form the die, the movable platen 12 and movable die element 22 and the die parts carried by movable die element 22 are moved rearwardly away from the stationary die element 21, and with the movable platen 12 and movable die element 22 in their rear-most position, the slide locks 32.are removed from engagement with the die core locking member 31, and the die core locking member 31 is moved rearwardly within the movable die element 22, as shown in FIG. 5.

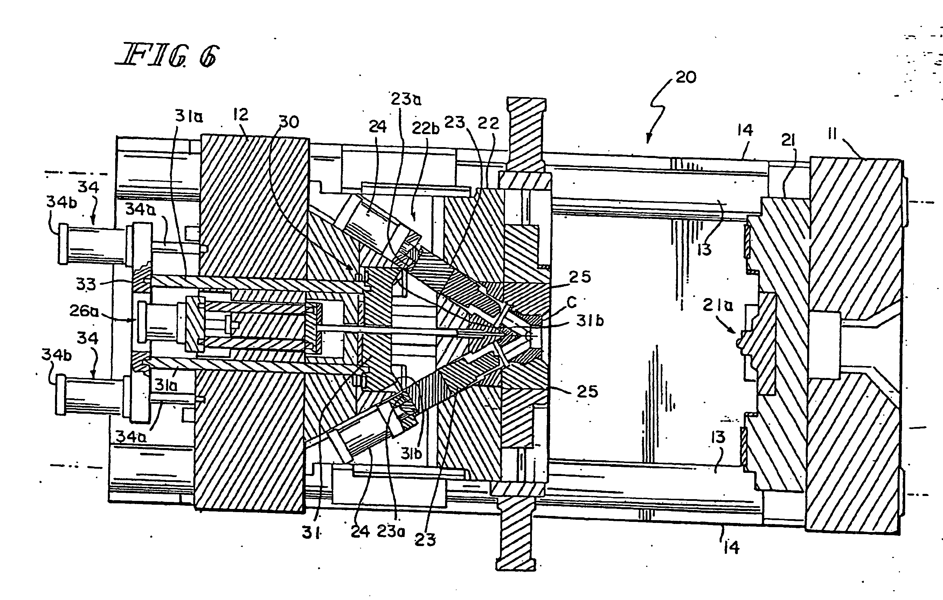

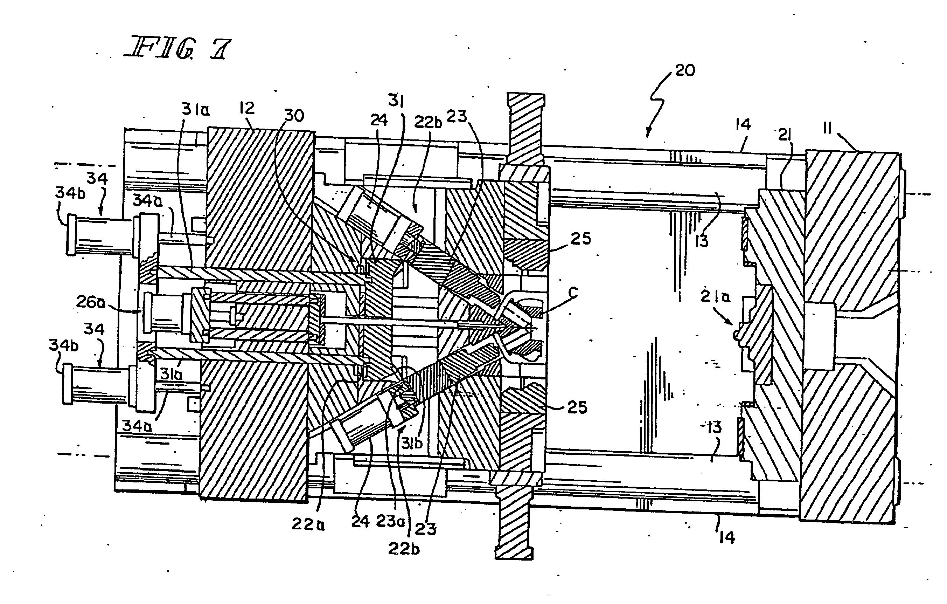

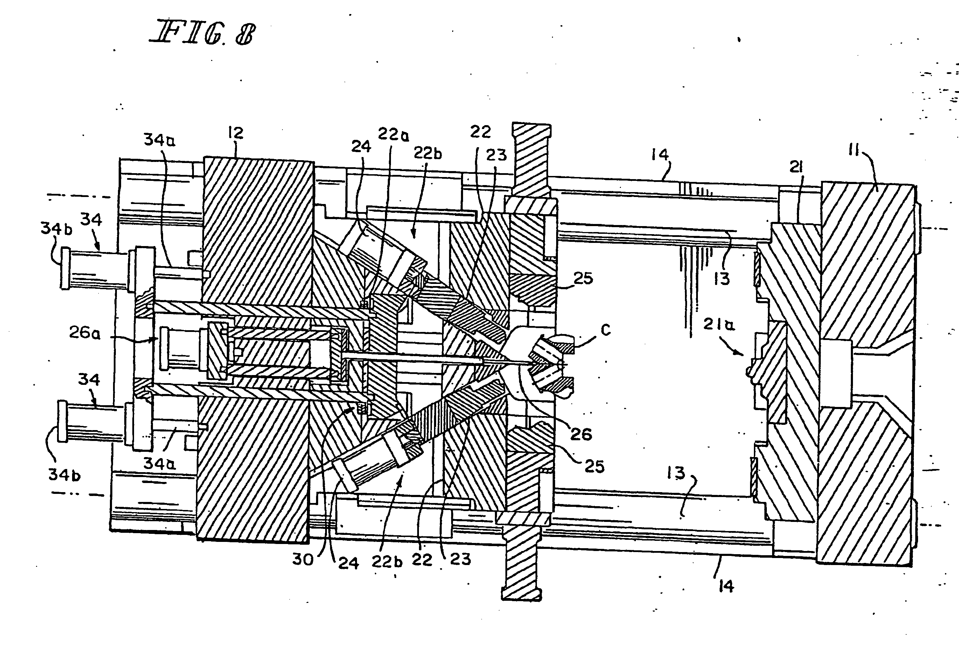

The die core pieces 23 are then retracted from the cast part and moved within the movable die element 22, as illustrated in FIG. 6; the slides 25 are moved outwardly on the movable die element 22 away from engagement with the cast part, as illustrated in FIG. 7; and the part ejector 26 is moved outwardly from the movable die element 22 to eject the cast part, as illustrated in FIG. 8.

In addition to providing a lighter, more compact and less expensive V-block die, with dies of the invention there is less chance for misalignment of the die core pieces and die core locking means because their alignment is determined by the surfaces of a single movable die element.

## Claims

1. A die-casting die (20) for casting a V-block for an internal combustion engine, comprising
a stationary die element (21), including a cavity-forming surface portion (21a), for mounting on the stationary platen (11) of a die-casting machine;
a movable die element (22) for mounting on the movable platen (12) of a die-casting machine, including a cavity-forming surface portion movable into cavity-forming engagement with the cavity-forming surface portion (21 a) of the stationary die element (21) on the stationary platen (11), said movable die element (22) carrying a plurality of slides (25) including cavity-forming surface portions, for movement transversely with respect to the movement of the movable platen (12) into cavity-forming engagement with the stationary die element (21), and further carrying at least two die-core elements (23) for movement at acute angles with respect to the movement of the movable die element (22) from a first position extending into the cavity formed by the stationary die element (21) carried by the stationary platen (11), the movable die element (22) and the plurality of slides (25), and a second position outside of said cavity; and
die-core locking means (30) for locking the at least two die-core elements (23) in their first positions, **characterized in that**
the die-core locking means (30) is movably carried by and within the movable die element (22) including said cavity-forming surface portion and is operable independently of the movable platen (12).

2. The die-casting die of claim 1, **characterized in that** the die-core locking means (30) is independently operable within the movable die element (22) to a die-core locking position.

3. The die-casting die of claim 1 or claim 2, **characterized in that** the die-core locking means (30) is carried within the movable die element (22) to a position engaging the at least two die-core elements (23) in their first positions.

4. The die-casting die of any of claims 1 to 3, **characterized in that** the die-core locking means (30) is movably carried for movement in a direction transverse to the movement of the at least two die-core elements (23).

5. The die-casting die of any of claims 1 to 4, **characterized in that** the die-core locking means (30) is operable without movement of the movable die element (22).

6. The die-casting die of any of any of claims 1 to 5, **characterized in that** the die-core locking means (30) includes a die-core locking member (31) reciprocatably carried within the movable die element (22) for movement along the axis of movement of the movable die element (22) and operable in its forwardmost position to engage the at least two die-core elements (23).

7. The die-casting die of any of claims 1 to 6, **characterized in that** the die-core locking means (30) includes a lock element (32) reciprocatably carried within the movable die element (22) for movement transverse to the direction of movement of the at least two die-core elements (23) and operable within the movable die element (22) to lock the at least two die-core elements (23).

8. The die casting die of any of claims 1 to 7, **characterized in that** the die-core locking means (30) is carried by the movable die element (22) for reciprocatable movement within a cavity (22b) formed by the movable die element (22), said cavity (22b) having an open front portion into which the rear portions (23a) of the at least two die-core elements (23) move in their first positions.

9. The die-casting die of any of claims 1 to 8, **characterized in that** the die-core locking means (30) includes at least one lock element (32) carried by the movable die element (22) for engagement with the movable die element (22) when locking the at least two die-core elements (23) in their first positions.

10. The die-casting die of any of claims 7 to 9, **characterized in that** the at least one lock element (32) is carried by the moveable die element (22) for movement transversely to the movement of the movable die element (22).

11. The die-casting die of any of claims 1 to 10, **characterized in that** the movable die element (22) includes a cavity (22b) in which the die-core locking means (30) is carried and which has an open front portion and an internal surface (22a), said die-core locking means (30) being movable away from the internal surface (22a), said movable die element (22) further including at least one lock element (32) movably carried within the cavity (22b) of the movable die element (22) to a lock position between the die-core locking means (30) and the internal surface (22a) of the cavity.

12. The die-casting die of any of claims 1 to 11, **characterized in that** the die-core locking means (30) is reciprocatably carried within the movable die element (22) between a forward position engaged with the at least two die-core elements (23) and a rear position disengaged from the at least two die-core elements (23), and at least one lock element (32) is carried within the movable die element (22) for movement transverse to the movement of the die-core locking means (30) into locking engagement with the die-core locking means (30) in its forward position.

13. The die-casting die of any of claims 1 to 12, **characterized by** at least one actuator (34) for the die-core locking means (30) carried by the die-casting machine.

14. The die-casting die assembly of any of claims 1 to 13, **characterized in that** the die-core locking means (30) is independently operable by at least one actuator (34) carried by the movable platen (12) of the die-casting machine.

15. The die-casting die of any of claims 1 to 14, **characterized by** at least one actuator (34) carried at the back of the movable platen (12) and connected with the die-core locking means (30) by at least one connection rod (31 a) passing through an opening in the movable platen (12).

16. The die-casting die of any of claims 1 to 15, **characterized in that** die-core locking means (30) is independently driven from a first position engaging the die-core elements (23) to a second position disengaged from the die-core elements (23) by an actuator (34) carried on the back of the movable platen (12) of the die-casting machine.

17. The die-casting die of any of claims 1 to 16, **characterized in that** the movable platen (12) carries at least one actuator (34), and the die-core locking means (30) includes a connection rod (31a) extending through the movable die element (22) and movable platen (12) and connected with the die-core locking means (30) for reciprocation by the actuator (34) within the movable die element (22).

18. The die-casting die of any of claims 13 to 17, **characterized in that** the at least one actuator (34) comprises two hydraulic cylinders (34b) connected to the movable platen (12) and to a bar (33) that drives a pair of connecting rods (31a) extending through the movable platen (12) and movable die element (22) for engagement with the die-core locking means (30).

19. The die-casting die of any of claims 13 to 18, **characterized in that** the at least one actuator (34) for the die-core locking means (30) is carried by the die-casting machine and is connected with a connection rod (31 a) engaged with the die-core locking means (30).

20. The die-casting die of any of claims 1 to 19, **characterized in that** the at least two die-core elements (23) are substantially enclosed within the movable die element (22).

21. A method for casting a V-block for an internal combustion engine, with a die-casting die as set forth in any of the preceding claims,
said method comprising the steps of:
moving the at least two die-core elements (23) outwardly from the movable die element (22) to a position extending from the movable die element (22), and
locking the at least two die-core elements (23) in their extended positions by moving said die core locking means (30) within the movable die element (22) to a die-core locking position in engagement with the extended die-core elements (23).

22. The method of claim 21 further **characterized by** moving said lock element (32) within the movable die element (22) to a position between the die-core locking means (30) and said internal surface (22a) of the movable die element (22).

23. The method of claim 21 or claim 22, **characterized by** moving the at least two die-core elements (23) outwardly to a position extending from the moveable die element (22) prior to closing the cavity.

24. The method of any of claims 21 to 23 **characterized by** moving the plurality of slides (25) into cavity-forming engagement with the stationary die element (21) and the movable die element (22) to form the cavity for casting the V-block with the at least two extended die-core elements (23) in their extended positions.

## Patentansprüche

1. Druckgussform (20) zum Gießen eines V-Blocks für einen Verbrennungsmotor, die Folgendes aufweist:
ein stationäres Formelement (21) zum Befestigen an der stationären bzw.
festen Platte (11) einer Druckgussmaschine, welches einen einen Hohlraum bildenden Oberflächenteil (21 a) aufweist;
ein bewegbares Formelement (22) zur Befestigung an der bewegbaren bzw. mobilen Platte (12) einer Druckgussmaschine, welches einen einen Hohlraum bildenden Oberflächenteil hat, der in einen einen Hohlraum bildenden Eingriff mit dem einen Hohlraum bildenden Oberflächenteil (21a) des stationären Formelementes (21) an der stationären Platte (11) bewegbar ist, wobei das bewegbare Formelement (22) eine Vielzahl von Gleitstücken (25) aufweist, die einen Hohlraum bildende Oberflächenteile aufweisen, und zwar zur Bewegung quer bezüglich der Bewegung der bewegbaren Platte (12) in einen Hohlraum bildenden Eingriff mit dem stationären Formelement (21) und das weiter mindestens ein Formkernelement (23) zur Bewegung in spitzen Winkeln bezüglich der Bewegung des bewegbaren Formelementes (22) trägt, und zwar zur Bewegung aus einer ersten Position, die sich in den Hohlraum erstreckt, der durch das stationäre Formelement (21), welches von der stationären Platte (11) getragen wird, das bewegbare Formelement (22) und die Vielzahl von Gleitstücken (25) gebildet wird, und einer zweiten Position außerhalb des Hohlraums; und
Formkernverriegelungsmittel (30) zum Verriegeln des mindestens einen Formkernelementes (23) in seiner ersten Position, **dadurch gekennzeichnet, dass**
die Formkernverriegelungsmittel (30) bewegbar durch das bewegbare Formelement (22) und innerhalb des bewegbaren Formelementes (22) getragen werden, welches den einen Hohlraum bildenden Oberflächenteil aufweist, und unabhängig von der beweglichen Platte (12) betreibbar bzw. bewegbar sind.

2. Druckgussform nach Anspruch 1, **dadurch gekennzeichnet, dass** die Formkernverriegelungsmittel (30) unabhängig innerhalb des bewegbaren Formelementes (22) zu einer Formkernverriegelungsposition betätigbar sind.

3. Druckgussform nach Anspruch 1 oder Anspruch 2, **dadurch gekennzeichnet, dass** die Formkernverriegelungsmittel (30) innerhalb des bewegbaren Formelementes (22) an einer Position getragen werden, in der ein Eingriff mit mindestens einem Formkernelement (23) in seiner ersten Position besteht.

4. Druckgussform nach einem der Ansprüche 1 bis 3, **dadurch gekennzeichnet, dass** die Formkernverriegelungsmittel (30) bewegbar zur Bewegung in einer Richtung quer zur Bewegung des mindestens einen Formkernelementes (23) getragen werden.

5. Druckgussform nach einem der Ansprüche 1 bis 4, **dadurch gekennzeichnet, dass** die Formkernverriegelungsmittel (30) ohne Bewegung des bewegbaren Formelementes (22) betreibbar sind.

6. Druckgussform nach einem der Ansprüche 1 bis 5, **dadurch gekennzeichnet, dass** die Formkernverriegelungsmittel (30) ein Formkernverriegelungsglied (31) aufweisen, welches hin und her bewegbar in dem bewegbaren Formelement (22) getragen ist, und zwar zur Bewegung entlang der Bewegungsachse des bewegbaren Formelementes (22) und in seiner vordersten Position betreibbar bzw. wirksam, um mit dem mindestens einen Formkernelement (23) in Eingriff zu kommen.

7. Druckgussform nach einem der Ansprüche 1 bis 6, **dadurch gekennzeichnet, dass** die Formkernverriegelungsmittel (30) ein Verriegelungselement (32) aufweisen, welches hin und her bewegbar in dem bewegbaren Formelement (22) zur Bewegung quer zur Bewegungsrichtung des mindestens einen Formkernelementes (23) getragen ist und innerhalb des bewegbaren Formelementes (22) betreibbar bzw. wirksam ist, um das mindestens eine Formkernelement (23) zu verriegeln.

8. Druckgussform nach einem der Ansprüche 1 bis 7, **dadurch gekennzeichnet, dass** die Formkernverriegelungsmittel (30) durch das bewegbare Formelement (22) zur Hin- und Herbewegung innerhalb eines Hohlraums (22b) getragen werden, der durch das bewegbare Formelement (22) gebildet wird, wobei der Hohlraum (22b) einen offenen vorderen Teil hat, in dem sich der hintere Teil (23a) des mindestens einen Formkernelementes (23) in seiner ersten Position bewegt.

9. Druckgussform nach einem der Ansprüche 1 bis 8, **dadurch gekennzeichnet, dass** die Formkernverriegelungsmittel (30) zumindest ein Verriegelungselement (32) aufweisen, welches von dem bewegbaren Formelement (22) getragen wird, und zwar zum Eingriff mit dem bewegbaren Formelement (22), wenn das mindestens eine Formkernelement (23) in seiner ersten Position verriegelt ist.

10. Druckgussform nach einem der Ansprüche 7 bis 9, **dadurch gekennzeichnet, dass** das mindestens eine Verriegelungselement (32) durch das bewegbare Formelement (22) zur Bewegung quer zur Bewegung des bewegbaren Formelementes (22) getragen wird.

11. Druckgussform nach einem der Ansprüche 1 bis 10, **dadurch gekennzeichnet, dass** das bewegbare Formelement (22) einen Hohlraum (22b) aufweist, in dem die Formkernverriegelungsmittel (30) getragen werden, und welches einen offenen vorderen Teil und eine Innenfläche (22a) hat, wobei die Formkernverriegelungsmittel (30) weg von der inneren Oberfläche (22a) bewegbar sind, wobei das bewegbare Formelement (22) weiter mindestens ein Verriegelungselement (32) aufweist, welches bewegbar innerhalb des Hohlraums (22b) des bewegbaren Formelementes (22) getragen wird, und zwar zu einer Verriegelungsposition zwischen den Formkernverriegelungsmittein (30) und der Innenfläche (22a) des Hohlraums.

12. Druckgussform nach einem der Ansprüche 1 bis 11, **dadurch gekennzeichnet, dass** die Formkernverriegelungsmittel (30) hin und her bewegbar in dem bewegbaren Formelement (22) getragen werden, und zwar zwischen einer vorderen Position in Eingriff mit dem mindestens einen Formkernelement (23) und einer hinteren Position außer Eingriff von dem mindestens einen Formkernelement (23), und wobei mindestens ein Verriegelungselement (32) innerhalb des bewegbaren Formelementes (22) zur Bewegung quer zur Bewegung der Formkernverriegelungsmittel (30) getragen wird, und zwar in Verriegelungseingriff mit den Formkernverriegelungsmitteln (30) in seiner vorderen Position.

13. Druckgussform nach einem der Ansprüche 1 bis 12, **gekennzeichnet durch** mindestens eine Betätigungsvorrichtung (34) für die Formkernverriegelungsmittel (30), die von der Druckgussmaschine getragen werden.

14. Druckgussform nach einem der Ansprüche 1 bis 13, **dadurch gekennzeichnet, dass** die Formkernverriegelungsmittel (30) unabhängig durch mindestens eine Betätigungsvorrichtung (34) betreibbar bzw. bewegbar sind, die von der bewegbaren Platte (12) der Druckgussmaschine getragen wird.

15. Druckgussform nach einem der Ansprüche 1 bis 14, **gekennzeichnet durch** mindestens eine Betätigungsvorrichtung (34), die am Hinterteil der bewegbaren Platte (12) getragen wird und mit den Formkernverriegelungsmitteln (30) durch mindestens eine Verbindungsstange (31a) verbunden ist, welche durch eine Öffnung in der bewegbaren Platte (12) verläuft.

16. Druckgussform nach einem der Ansprüche 1 bis 15, **dadurch gekennzeichnet, dass** die Formkernverriegelungsmittel (30) unabhängig von einer ersten Position in Eingriff mit den Formkernelementen (32) zu einer zweiten Position außer Eingriff von den Formkernelementen (23) durch eine Betätigungsvorrichtung (34) angetrieben sind, welche an dem Hinterteil der bewegbaren Platte (12) der Druckgussmaschine getragen wird.

17. Druckgussform nach einem der Ansprüche 1 bis 16, **dadurch gekennzeichnet, dass** die bewegbare Platte (12) mindestens eine Betätigungsvorrichtung (34) trägt, und die Formkernverriegelungsmittel (30) eine Verbindungsstange (31a) aufweisen, die sich durch das bewegbare Formelement (22) und eine bewegbare Platte (12) erstreckt und mit den Formkernverriegelungsmitteln (30) verbunden ist, und zwar zur Hin- und Herbewegung innerhalb des bewegbaren Formelementes (22) durch die Betätigungsvorrichtung (34).

18. Druckgussform nach einem der Ansprüche 13 bis 17, **dadurch gekennzeichnet, dass** die mindestens eine Betätigungsvorrichtung (34) zwei Hydraulikzylinder (34b) aufweist, die mit der bewegbaren Platte (12) verbunden sind, und eine Stange (33), die ein Paar von Verbindungsstangen (31a) antreibt, welche sich durch die bewegbare Platte (12) erstrecken, und ein bewegbares Formelement (22) zum Eingriff mit den Formkernverriegelungsmitteln (30).

19. Druckgussform nach einem der Ansprüche 13 bis 18, **dadurch gekennzeichnet, dass** die mindestens eine Betätigungsvorrichtung (34) für die Formkernverriegelungsmittel (30) durch die Druckgussmaschine getragen wird und in Verbindung mit einer Verbindungsstange (31a) ist, die mit den Formkernverriegelungsmitteln (30) in Eingriff steht.

20. Druckgussform nach einem der Ansprüche 1 bis 19, **dadurch gekennzeichnet, dass** das mindestens eine Formkernelement (23) im Wesentlichen innerhalb des bewegbaren Formkernelementes (22) eingeschlossen ist.

21. Verfahren zum Gießen eines V-Blockes für einen Verbrennungsmotor mit einer Druckgussform nach einem der vorhergehenden Ansprüche, wobei das Verfahren folgende Schritte aufweist:
Bewegen des mindestens einen Formkernelementes (23) aus dem bewegbaren Formelement (22) zu einer ausgefahrenen Position in dem Hohlraum und Verriegeln des mindestens einen Formkernelementes (23) in seiner ausgefahrenen Position durch Bewegen der Formkernverriegelungsmittel (30) innerhalb des bewegbaren Formelementes (22) zu einer Formkernverriegelungsposition in Eingriff mit dem ausgefahrenen Formkernelement (23).

22. Verfahren nach Anspruch 21, welches weiter **gekennzeichnet ist durch** Bewegen des Verriegelungselementes (32) innerhalb des bewegbaren Formelementes (22) zu einer Position zwischen den Formkernverriegelungsmitteln (30) und der Innenfläche (22a) des bewegbaren Formelementes (22).

23. Verfahren nach Anspruch 21 oder 22, **gekennzeichnet durch** das Bewegen des mindestens einen Formkernelementes (23) nach außen zu einer Position, die sich von dem bewegbaren Formelement (22) erstreckt, und zwar vor dem Schließen des Hohlraums.

24. Verfahren nach einem der Ansprüche 21 bis 23, **gekennzeichnet durch** Bewegen der Vielzahl von Gleitstücken (25) in einen Hohlraum formenden Eingriff mit dem stationären Formelement (21) und dem bewegbaren Formelement (22), um den Hohlraum zum Gießen des V-Blockes zu bilden, wobei das mindestens eine ausgefahrene Formkernelement (23) in seiner ausgefahrenen Position ist.

## Revendications

1. Moule de coulée sous pression (20) pour couler un bloc en V pour un moteur à combustion interne, comprenant :
un élément de moule fixe (21), comprenant une partie de surface de formation de cavité (21a), pour montage sur le plateau fixe (11) d'une machine de coulée sous pression ;
un élément de moule mobile (22) pour montage sur le plateau mobile (12) d'une machine de coulée sous pression, comprenant une partie de surface de formation de cavité mobile pour un engagement de formation de cavité avec la partie de surface de formation de cavité (21a) de l'élément de moule fixe (21) sur le plateau fixe (11), l'élément de moule mobile (22) supportant une pluralité d'éléments coulissants (25) comprenant des parties de surface de formation de cavité, pour un déplacement transversal par rapport au déplacement du plateau mobile (12) pour un engagement de formation de cavité avec l'élément de moule fixe (21), et comportant en outre au moins un élément de coeur de moule (23) pour un déplacement à angle aigu par rapport au déplacement de l'élément de moule mobile (22) à partir d'une première position s'étendant dans la cavité formée par l'élément de moule fixe (21) supporté par le plateau fixe (11), l'élément de moule mobile (22) et la pluralité d'éléments coulissants (25), et une deuxième position à l'extérieur de ladite cavité ; et
des moyens de verrouillage de coeur de moule (30) pour verrouiller ledit au moins un élément de coeur de moule (23) dans sa première position, **caractérisé en ce que**
les moyens de verrouillage de coeur de moule (30) sont supportés de façon mobile par l'élément de moule mobile (22), et dans celui-ci, comprenant la partie de surface de formation de cavité, et sont actionnables indépendamment du plateau mobile (12).

2. Moule de coulée sous pression selon la revendication 1, **caractérisé en ce que** les moyens de verrouillage de coeur de moule (30) sont actionnables indépendamment dans l'élément de moule mobile (22) vers une position de verrouillage de coeur de moule.

3. Moule de coulée sous pression selon la revendication 1 ou 2, **caractérisé en ce que** les moyens de verrouillage de coeur de moule (30) sont supportés dans l'élément de moule mobile (22) vers une position d'engagement avec ledit au moins un élément de coeur de moule (23) dans sa première position.

4. Moule de coulée sous pression selon l'une quelconque des revendications 1 à 3, **caractérisé en ce que** les moyens de verrouillage de coeur de moule (30) sont supportés de façon mobile pour un déplacement dans une direction transversale au déplacement dudit au moins un élément de coeur de moule (23).

5. Moule de coulée sous pression selon l'une quelconque des revendications 1 à 4, **caractérisé en ce que** les moyens de verrouillage de coeur de moule (30) sont actionnables sans déplacement de l'élément de moule mobile (22).

6. Moule de coulée sous pression selon l'une quelconque des revendications 1 à 5, **caractérisé en ce que** les moyens de verrouillage de coeur de moule (30) comprennent un élément de verrouillage de coeur de moule (31) supporté en va-et-vient dans l'élément de moule mobile (22) pour un déplacement suivant l'axe de déplacement de l'élément de moule mobile (22) et actionnable dans sa position la plus avancée pour s'engager avec ledit au moins un élément de coeur de moule (23).

7. Moule de coulée sous pression selon l'une quelconque des revendications 1 à 6, **caractérisé en ce que** les moyens de verrouillage de coeur de moule (30) comprennent un élément de verrouillage (32) supporté en va-et-vient dans l'élément de moule mobile (22) pour un déplacement transversal par rapport à la direction de déplacement dudit au moins un élément de coeur de moule (23) et actionnable dans l'élément de moule mobile (22) pour verrouiller ledit au moins un élément de coeur de moule (23).

8. Moule de coulée sous pression selon l'une quelconque des revendications 1 à 7, **caractérisé en ce que** les moyens de verrouillage de coeur de moule (30) sont supportés par l'élément de moule mobile (22) pour un déplacement en va-et-vient dans une cavité (22b) formée par l'élément de moule mobile (22), la cavité (22b) ayant une partie avant ouverte dans laquelle la partie arrière (23a) dudit au moins un élément de coeur de moule (23) se déplace dans sa première position.

9. Moule de coulée sous pression selon l'une quelconque des revendications 1 à 8, **caractérisé en ce que** les moyens de verrouillage de coeur de moule (30) comprennent au moins un élément de verrouillage (32) supporté par l'élément de moule mobile (22) pour un engagement avec l'élément de moule mobile (22) lors du verrouillage dudit au moins un élément de coeur de moule (23) dans sa première position.

10. Moule de coulée sous pression selon l'une quelconque des revendications 7 à 9, **caractérisé en ce que** ledit au moins un élément de verrouillage (32) est supporté par l'élément de moule mobile (22) pour un déplacement transversal par rapport au déplacement de l'élément de moule mobile (22).

11. Moule de coulée sous pression selon l'une quelconque des revendications 1 à 10, **caractérisé en ce que** l'élément de moule mobile (22) comprend une cavité (22b) dans laquelle les moyens de verrouillage de coeur de moule (30) sont supportés et qui comporte une partie avant ouverte et une surface interne (22a), les moyens de verrouillage de coeur de moule (30) étant mobiles pour s'éloigner de la surface interne (22a), l'élément de moule mobile (22) comprenant en outre au moins un élément de verrouillage (32) supporté de façon mobile dans la cavité (22b) de l'élément de moule mobile (22) vers une position de verrouillage entre les moyens de verrouillage de coeur de moule (30) et la surface interne (22a) de la cavité.

12. Moule de coulée sous pression selon l'une quelconque des revendications 1 à 11, **caractérisé en ce que** les moyens de verrouillage de coeur de moule (30) sont supportés en va-et-vient dans l'élément de moule mobile (22) entre une position en avant engagée avec ledit au moins un élément de coeur de moule (23) et une position en arrière désengagée dudit au moins un élément de coeur de moule (23), et au moins un élément de verrouillage (32) est supporté dans l'élément de moule mobile (22) pour un déplacement transversal au déplacement des moyens de verrouillage de coeur de moule (30) dans un engagement de verrouillage avec les moyens de verrouillage de coeur de moule (30) dans sa position en avant.

13. Moule de coulée sous pression selon l'une quelconque des revendications 1 à 12, **caractérisé par** au moins un actionneur (34) pour les moyens de verrouillage de coeur de moule (30) supporté par la machine de coulée sous pression.

14. Structure de moule de coulée sous pression selon l'une quelconque des revendications 1 à 13, **caractérisée en ce que** les moyens de verrouillage de coeur de moule (30) sont actionnables indépendamment par au moins un actionneur (34) supporté par le plateau mobile (12) de la machine de coulée sous pression.

15. Moule de coulée sous pression selon l'une quelconque des revendications 1 à 14, **caractérisé par** au moins un actionneur (34) supporté à l'arrière du plateau mobile (12) et connecté aux moyens de verrouillage de coeur de moule (30) par au moins une tige de connexion (31a) passant à travers une ouverture dans le plateau mobile (12).

16. Moule de coulée sous pression selon l'une quelconque des revendications 1 à 15, **caractérisé en ce que** les moyens de verrouillage de coeur de moule (30) sont entraînés indépendamment à partir d'une première position s'engageant avec les éléments de coeur de moule (23) vers une deuxième position désengagée des éléments de coeur de moule (23) par un actionneur (34) supporté par l'arrière du plateau mobile (12) de la machine de coulée sous pression.

17. Moule de coulée sous pression selon l'une quelconque des revendications 1 à 16, **caractérisé en ce que** le plateau mobile (12) supporte au moins un actionneur (34), et que les moyens de verrouillage de coeur de moule (30) comprennent une tige de liaison (31a) s'étendant à travers l'élément de moule mobile (22) et le plateau mobile (12) et connectée aux moyens de verrouillage de coeur de moule (30) pour un entraînement en va-et-vient par l'actionneur (34) dans l'élément de moule mobile (22).

18. Moule de coulée sous pression selon l'une quelconque des revendications 13 à 17, **caractérisé en ce que** ledit au moins un actionneur (34) comprend deux vérins hydrauliques (34b) connectés au plateau mobile (12) et à une barre (33) qui entraîne une paire de tiges de liaison (31a) s'étendant à travers le plateau mobile (12) et l'élément de moule mobile (22) pour engagement avec les moyens de verrouillage de coeur de moule (30).

19. Moule de coulée sous pression selon l'une quelconque des revendications 13 à 17, **caractérisé en ce que** ledit au moins un actionneur (34) pour les moyens de verrouillage de coeur de moule (30) est supporté par la machine de coulée sous pression et est connecté avec une tige de liaison (31a) engagée avec les moyens de verrouillage de coeur de moule (30).

20. Moule de coulée sous pression selon l'une quelconque des revendications 1 à 19, **caractérisé en ce que** ledit au moins un élément de coeur de moule (23) est sensiblement enfermé dans l'élément de moule mobile (22).

21. Procédé de moulage d'un bloc en V pour un moteur à combustion interne, avec un moule de coulée sous pression conforme à l'une quelconque des revendications précédentes,
le procédé comprenant les étapes suivantes :
déplacer ledit au moins un élément de coeur de moule (23) vers l'extérieur à partir de l'élément de moule mobile (22) vers une position étendue dans ladite cavité, et verrouiller ledit au moins un élément de coeur de moule (23) dans sa position étendue en déplaçant les moyens de verrouillage de coeur de moule (30) dans l'élément de moule mobile (22) vers une position de verrouillage de coeur de moule en engagement avec l'élément de coeur de moule (23) étendu.

22. Procédé selon la revendication 21, **caractérisé en outre par** le déplacement de l'élément de verrouillage (32) se trouvant dans l'élément de moule mobile (22) vers une position entre les moyens de verrouillage de coeur de moule (30) et la surface interne (22a) de l'élément de moule mobile (22).

23. Procédé selon la revendication 21 ou 22, **caractérisé par** le déplacement dudit au moins un élément de coeur de moule (23) vers l'extérieur vers une position s'étendant à partir de l'élément de moule mobile (22) avant de fermer la cavité.

24. Procédé selon l'une quelconque des revendications 21 à 23, **caractérisé par** le déplacement de la pluralité d'éléments coulissants (25) dans un engagement de formation de cavité avec l'élément de moule fixe (21) et l'élément de moule mobile (22) pour former la cavité pour couler le bloc en V avec ledit au moins un élément de coeur de moule étendu (23) dans sa position étendue.
